# EUROPÄISCHE PATENTSCHRIFT

(11) **EP 2 699 459 B1**
(45) Veröffentlichungstag und Bekanntmachung des Hinweises auf die Patenterteilung: **12.10.2016**
(21) Anmeldenummer: 12715940.8
(22) Anmeldetag: 16.04.2012
(51) Int. Cl.: B60T 8/40

(54) **BREMSANLAGE FÜR KRAFTFAHRZEUGE**
BRAKE SYSTEM FOR MOTOR VEHICLES
SYSTÈME DE FREINAGE POUR VÉHICULES AUTOMOBILES

(30) Priorität: 19.04.2011 DE 102011007656; 19.04.2011 DE 102011007655; 11.04.2012 DE 102012205860
(43) Veröffentlichungstag der Anmeldung: 26.02.2014
(73) Patentinhaber: Continental Teves AG & Co. oHG, 60488 Frankfurt (DE)
(72) Erfinder: BILLER, Harald, 65760 Eschborn (DE); STAUDER, Peter, 55128 Mainz (DE); BESIER, Marco, 65307 Bad Schwalbach (DE); FEIGEL, Hans-Jörg, 61191 Rosbach (DE)
(86) Internationale Anmeldenummer: PCT/EP2012/056868
(87) Internationale Veröffentlichungsnummer: WO 2012/143311

(56) Entgegenhaltungen:
- WO-A1-2011/029812
- DE-A1- 4 213 740
- DE-A1-102008 015 241
- DE-A1-102009 031 392
- US-A1- 2008 223 670

## Beschreibung

Die vorliegende Erfindung betrifft eine Bremsanlage für Kraftfahrzeuge, die in einer "Brake-by-Wire" Betriebsart sowohl vom Fahrzeugführer als auch unabhängig vom Fahrzeugführer ansteuerbar ist, vorzugsweise in der "Brake-by-Wire" Betriebsart betrieben wird und in mindestens einer Rückfallbetriebsart betrieben werden kann, in der nur der Betrieb durch den Fahrzeugführer möglich ist, mit
a) einem Bremspedal zum Betätigen eines Hauptbremszylinders mit einem Gehäuse, zwei hintereinander angeordneten Kolben, die im Gehäuse angeordnete Druckräume begrenzen, an die zwei Bremskreise angeschlossen sind, auf die bei der Betätigung der Bremsanlage durch den Fahrzeugführer eine Betätigungskraft (Pedalkraft) ausgeübt wird und die bei unbetätigtem Bremspedal von Rückstellfedern in eine Ausgangsstellung positioniert werden,
b) einem unter Atmosphärendruck stehenden Druckmittelvorratsbehälter mit den Druckräumen zugeordneten Kammern,
c) einem Wegsimulator mit einem Simulatorfreigabeventil, der in der Betriebsart "Brake-by-wire" dem Fahrzeugführer das gewohnte Bremspedalgefühl vermittelt, wobei er über das Simulatorfreigabeventil mit einem der Druckräume hydraulisch verbunden ist und diese Verbindung in der Rückfallbetriebsart getrennt ist,
d) einer elektrisch steuerbaren Druckquelle, die einen Bremssystemdruck abgibt,
e) mit Trennventilen zum Absperren der Druckräume von den Bremskreisen,
f) mittels eines Elektromotors angetriebenen, den Bremskreisen zugeordneten Pumpen, sowie hydraulischen Niederdruckspeichern,
g) einem Einlassventil und einem Auslassventil pro Radbremse, zum Einstellen radindividueller Bremsdrücke, die aus den Bremskreisen zugeordneten Modulatorvordrücken abgeleitet werden, wobei die Eingangsanschlüsse der Einlassventile mittels Modulatorvordruckleitungen mit den Modulatorvordrücken versorgt werden, und wobei die Einlassventile im nicht angesteuerten Zustand den Modulatorvordruck zu den Radbremsen weiterleiten und im angesteuerten Zustand einen Radbremsdruckaufbau begrenzen oder verhindern und die Auslassventile im nicht angesteuerten Zustand ein Abströmen von Druckmittel aus den Radbremsen in einen Niederdruckspeicher verhindern und im angesteuerten Zustand zulassen und kontrollieren, wobei die Einlassventile geschlossen werden, so dass ein Radbremsdruckabbau erfolgt,
h) mit an die Ausgangsanschlüsse der Pumpen angeschlossenen, elektrisch betätigbaren, stromlos offenen Ventilen, sowie
i) mindestens einer elektronischen Steuer- und Regeleinheit.

In der US 2008/0223670 A1 wird eine Bremsanlage mit einem Hauptbremszylinder offenbart, an welchen zwei Bremskreise angeschlossen sind. Die Bremsanlage umfasst je Bremskreis einen Pedalsimulator mit einem Simulatorventil sowie eine elektrisch steuerbare Druckquelle. Die dargestellten Radbremsen sind jeweils über ein stromlos offenes Ventil direkt mit dem Hauptbremszylinder verbunden und über ein stromlos geschlossenes Ventil direkt an die Druckquelle angeschlossen. Weitere Ventile sind nicht vorgesehen.

Aus der WO 2011/029812 A1 ist eine "Brake-by-wire"-Bremsanlage mit Hauptbremszylinder und Wegsimulator bekannt, welche nur eine einzige elektrisch steuerbare Druckquelle umfasst.

Eine gattungsgemäße Bremsanlage ist beispielsweise aus der DE 10 2009 031 392 A1 bekannt. Bei der vorbekannten Bremsanlage stehen zwei Druckräume eines Hauptbremszylinders jeweils in Verbindung mit zwei Druckkammern einer zweikreisigen elektrisch steuerbaren elektrohydraulischen Druckquelle. Die zwei Druckkammern stehen über ein ABS mit vier Radzylindern in Verbindung. Die Radzylinder werden durch Bremsfluiddruck betätigt, welcher durch den Hauptbremszylinder in einer Störsituation erzeugt wird, in welcher die elektrisch steuerbare Druckquelle nicht arbeitet. Das vorbekannte Bremssystem enthält zwei getrennte, unabhängige Fluiddruckleitungen: eine Leitung erstreckt sich von einem der Druckräume des Hauptbremszylinders zu den Radzylindern über eine der Druckkammern der steuerbaren Druckquelle und die andere Leitung erstreckt sich von dem anderen Druckraum des Hauptbremszylinders zum zweiten Radzylinderpaar über die andere Druckkammer der steuerbaren Druckquelle. Daher ist eine minimal erforderliche Bremskraft gewährleistet, auch wenn ein Störfall in einer der beiden Fluiddruckleitungen auftritt.

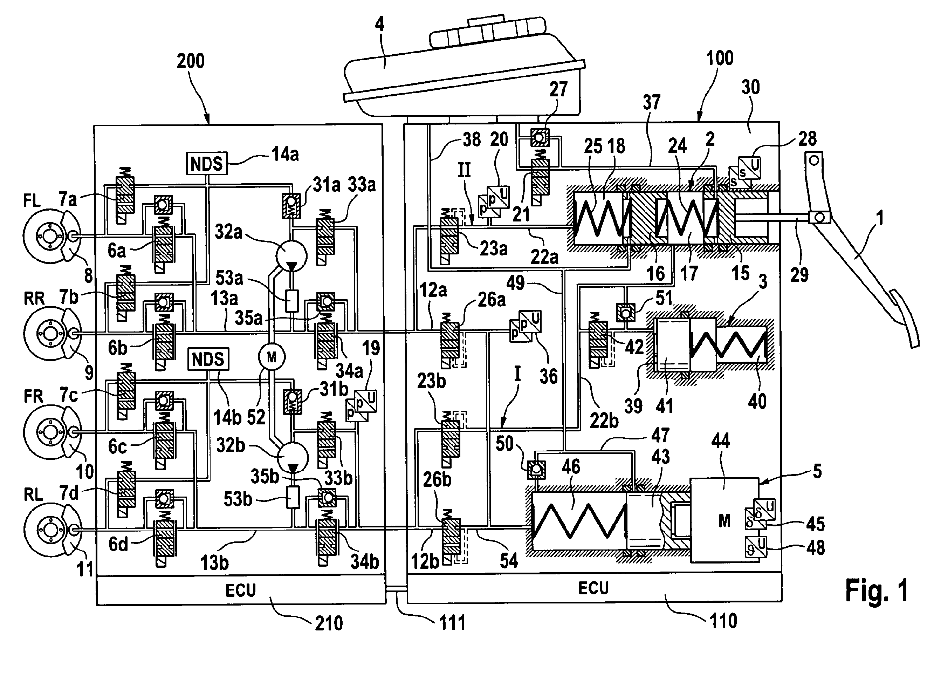

Nachteilig ist, dass in einer Betriebsart ohne Betätigung der elektrisch steuerbaren Druckquelle tatsächlich nicht nur eine minimale Bremskraft, sondern praktisch keine Bremskraft zur Verfügung steht, wenn in einem der beiden Bremskreise eine Leckage auftritt. Wie aus jeder der Fig. 1 bis 6 des genannten Dokuments erhellt, sind die beiden Druckkammern der elektrisch steuerbaren Druckquelle durch einen Schwimmkolben voneinander getrennt, der in einem Zylinder frei verschiebbar ist. Daher bewirkt das im intakten Bremskreis aus dem Hauptzylinder in den Zylinder verschobene Druckmittelvolumen lediglich eine Verschiebung des Schwimmkolbens, aber keinen Radbremsdruckaufbau.

Ausgehend von diesem Stand der Technik stellt sich die Aufgabe, ein Bremssystem zu entwickeln, das in dieser Betriebsart beim Ausfall eines Bremskreises in der Lage ist, im verbleibenden Bremskreis Druck aufzubauen, und das einfach zu diagnostizieren ist.

Diese Aufgabe wird erfindungsgemäß durch eine Bremsanlage gemäß Anspruch 1 gelöst. Vorteilhafte Weiterbildungen des Erfindungsgegenstandes sind in den Unteransprüchen 2 bis 11 angegeben.

Gemäß einer bevorzugten Ausführungsform der Bremsanlage sind innerhalb des ersten Moduls in jedem Bremskreis die Anschlüsse für den Hauptbremszylinder mit den entsprechenden Anschlüssen für die elektrisch steuerbare Druckquelle über eine Parallelschaltung eines analog regelbaren, stromlos offenen (SO-) 2/2-Wegeventils mit einem zu den Einlassventilen hin öffnenden Rückschlagventil verbunden.

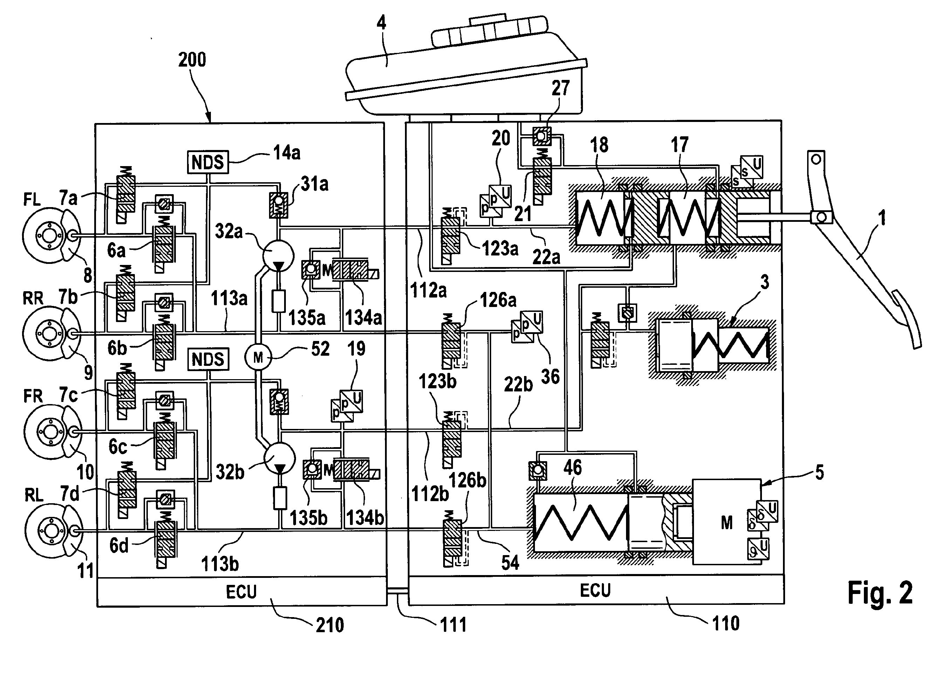

Die vorliegende Erfindung wird in der folgenden Beschreibung im Zusammenhang mit der beiliegenden schematischen Zeichnung an zwei Ausführungsbeispielen näher erläutert. Dabei zeigt die Figur 1 der Zeichnung ein hydraulisches Schaltbild des ersten und die Figur 2 ein hydraulisches Schaltbild des zweiten Ausführungsbeispiels der erfindungsgemäßen Bremsanlage.

Die in der Zeichnung dargestellte Bremsanlage besteht im Wesentlichen aus einem mittels eines Betätigungs- bzw. Bremspedals 1 betätigbaren hydraulischen Tandemhauptzylinder 2, einem mit dem Tandemhauptzylinder 2 zusammen wirkenden Wegsimulator 3, einem dem Tandemhauptzylinder 2 zugeordneten Druckmittelvorratsbehälter 4, einer elektrisch steuerbaren Druckquelle 5, elektrisch steuerbaren Druckmodulations- bzw. Einlass- und Auslassventilen 6a-6d, 7a-7d, die paarweise über Mittenanschlüsse hydraulisch zusammengeschaltet sind, an die Radbremsen 8, 9, 10, 11 eines nicht dargestellten Kraftfahrzeuges angeschlossen sind. Die Eingangsanschlüsse der Einlassventile 6a-6d werden paarweise mittels Modulatorvordruckleitungen 13a, 13b mit zwei Drücken versorgt, die als Modulatorvordrücke bezeichnet werden, während die Ausgangsanschlüsse der Auslassventile 7a-7d paarweise an je einem hydraulischen Niederdruckspeicher 14a, 14b angeschlossen sind. Zum Erfassen des im Bremskreis I herrschenden Druckes ist ein vorzugsweise redundant ausgeführter Drucksensor 19 vorgesehen.

Wie außerdem aus der Zeichnung erhellt, sind die Niederdruckspeicher 14a, 14b über in Richtung der Niederdruckspeicher 14a, 14b schließende Rückschlagventile 31a, 31b mit je einer hydraulischen Pumpe 32a, 32b verbunden Die beiden Pumpen 32a, 32b werden mittels eines gemeinsamen Elektromotors angetrieben, der mit dem Bezugszeichen 52 versehen ist. Je ein elektromagnetisch betätigbares, stromlos geschlossenes (SG-) 2/2-Wegeventil 33a, 33b ist zwischen Bremskreisdruckleitung 12a, 12b und Sauganschluss der Pumpe 32a, 32b geschaltet, was eine ventilgesteuerte Druckmittelzufuhr zur Pumpe ermöglicht. Die Druckanschlüsse der Pumpen 32a, 32b sind über hydraulische Pulsationsdämpfungselemente 53a, 53b an die Modulatorvordruckleitungen 13a, 13b angeschlossen. Dies ermöglicht eine Erhöhung der beiden Modulatorvordrücke mittels der Pumpen 32a, 32b. Die zuvor genannten Komponenten 6a - 6d, 7a - 7d, 13a, 13b, 14a, 14b, (31 - 33)a, (31 - 33)b sind zu einem ersten elektrohydraulischen Modul zusammengefasst, das mit dem Bezugszeichen 200 versehen ist. Der Ansteuerung sämtlicher elektrisch betätigbaren Komponenten des ersten elektrohydraulischen Moduls 200 dient eine elektronische Steuer- und Regeleinheit 210.

Wie in der Zeichnung dargestellt ist, weist der Tandemhauptzylinder 2 der erfindungsgemäßen Bremsanlage in einem Gehäuse 30 zwei hintereinander angeordnete hydraulische Kolben 15, 16 auf, die hydraulische Kammern bzw. Druckräume 17, 18 begrenzen. Die Druckräume 17, 18 stehen einerseits über in den Kolben 15, 16 ausgebildete radiale Bohrungen sowie entsprechende Druckausgleichs-leitungen 37, 38 mit dem Druckmittelvorratsbehälter 4 in Verbindung, wobei diese durch eine Relativbewegung der Kolben 17, 18 im Gehäuse 30 absperrbar sind, und andererseits mittels hydraulischer Leitungen 22a, 22b mit den zuvor erwähnten Bremskreisdruckleitungen 12a, 12b in Verbindung, über die das erste elektrohydraulische Modul 200 an den Tandemhauptzylinder 2 angeschlossen ist. Die hydraulischen Leitungen 22a, 22b sowie die Bremskreisdruckleitungen 12a, 12b gehören zu je einem Bremskreis, der mit den Bezugszeichen I und II versehen ist. Dabei ist in der Druckausgleichsleitung 37 eine Parallelschaltung eines stromlos offenen (SO-) Diagnoseventils 21 mit einem zum Druckmittelvorratsbehälter 4 hin schließenden Rückschlagventil 27 enthalten. Zwischen hydraulischen Leitungen 22a, 22b und Bremskreisdruckleitungen 12a, 12b sind Trennventile 23a, 23b geschaltet, die als elektrisch betätigbare, vorzugsweise stromlos offene (SO-) 2/2-Wegeventile ausgebildet sind und die ein Absperren der Hauptbremszylinder-Druckräume 17, 18 von den Bremskreisdruckleitungen 12a, 12b ermöglichen. Ein an den Druckraum 18 oder die hydraulische Leitung 22a angeschlossener Drucksensor 20 erfasst den im Druckraum 18 durch ein Verschieben des zweiten Kolbens 16 aufgebauten Druck. Außerdem nehmen die Druckräume 17, 18 Rückstellfedern 24, 25 auf, die die Kolben 15, 16 bei unbetätigtem Hauptbremszylinder in einer Ausgangslage positionieren. Eine Druckstange 29 koppelt die Schwenkbewegung des Bremspedals 1 infolge einer Pedalbetätigung mit der Translationsbewegung des ersten (Hauptzylinder-)Kolbens 15, dessen Betätigungsweg von einem vorzugsweise redundant ausgeführten Wegsensor 28 erfasst wird. Dadurch ist das entsprechende Kolbenwegsignal ein Maß für den Bremspedalbetätigungswinkel. Es repräsentiert einen Bremswunsch eines Fahrzeugführers.

Außerdem ist aus der zeichnerischen Darstellung der erfindungsgemäßen Bremsanlage ersichtlich, dass der zuvor genannte Wegsimulator 3 hydraulisch an den Hauptbremszylinder 2 angekoppelt ist und beispielsweise als eine eigenständige Baugruppe ausgebildet ist, die im Wesentlichen aus einer Simulatorkammer 39, einer Simulatorfederkammer 40 sowie einem die beiden Kammern 39, 40 voneinander trennenden Simulatorkolben 41 besteht. Dabei ist die Simulatorkammer 39 mittels eines elektrisch betätigbaren Simulatorfreigabeventils 42 über die hydraulische Verbindung 22b mit dem ersten Druckraum 17 des Tandemhauptzylinders 2 verbindbar. Bei Vorgabe einer Pedalkraft und aktiviertem Simulatorfreigabeventil 42 strömt Druckmittel vom Hauptzylinder-Druckraum 17 in die Simulatorkammer 39. Das dabei generierte Pedalgefühl hängt von dem im Wegsimulator aufgebauten Gegendruck und von den Drosseleingenschaften des aktivierten Simulatorfreigabeventils 42 ab. Ein hydraulisch antiparallel zum Simulatorfreigabeventil 42 angeordetes weiteres Rückschlagventil 51 ermöglicht unabhängig vom Schaltzustand des Simulatorfreigabeventils 42 und unabhängig von dessen Drosselwirkung ein weitgehend ungehindertes Zurückströmen des Druckmittels von der Simulatorkammer 39 zum Hauptzylinder-Druckraum 17. Das daraus resultierende ungedämpfte Lösen des Bremspedals wird als angenehm empfunden. Ohne diese Funktion könnte der Eindruck so genannter "klebender" Bremsen entstehen.

Schließlich ist in der Zeichnung erkennbar, dass die elektrisch steuerbare Druckquelle 5 als eine hydraulische Zylinder-Kolben-Anordnung bzw. ein einkreisiger elektrohydraulischer Aktuator ausgebildet ist, dessen Kolben 43 von einem schematisch angedeuteten Elektromotor 44 unter Zwischenschaltung eines ebenfalls schematisch dargestellten Rotations-Translationsgetriebes betätigbar ist. Ein der Erfassung der Rotorlage des Elektromotors 44 dienender, lediglich schematisch angedeuteter Rotorlagesensor ist mit dem Bezugszeichen 45 bezeichnet. Zusätzlich kann auch ein Temperatursensor 48 zum Erfassen der Temperatur der Motorwicklung verwendet werden. Der Kolben 43 begrenzt einen Druckraum 46. Zur Abdichtung des Spalts zwischen Kolben und Druckraumwandung dient ein Elastomerdichtring, der in einer Nut auf dem Kolben oder aber wie dargestellt - bei Verwendung eines Plungerkolbens - in einer Nut der Wandung angeordnet ist. Das Plungerprinzip erlaubt die Anordnung eines mit dem Druckmittelvorratsbehälter 4 verbundenen Schmierungsanschlusses 47. Dadurch werden die beiden Aufgaben des Dichtpakets: Abdichten gegen ein Druckgefälle und Abdichten von Druckmittel zu Luft auf zwei Elastomerdichtringe verteilt, wobei beide auf ihre spezielle Aufgabe hin optimierbar sind. Eine Druckmittelverbindung 49, die an den Druckmittelvorratsbehälter 4 direkt oder über die vorhin erwähnte Druckausgleichsleitung 38 indirekt angeschlossen ist, führt über ein in dieser Durchströmrichtung öffnendes Rückschlagventil 50 zum Druckraum 46. An den Druckraum 46 der elektrisch steuerbaren Druckquelle 5 ist eine Systemdruckleitung 54 angeschlossen, die den von der elektrisch steuerbaren Druckquelle 5 abgegebenen Systemdruck weiterleitet. An die Systemdruckleitung 54 ist ein vorzugsweise redundant ausgeführter Drucksensor 36 angeschlossen, der den Systemdruck erfasst, sowie zwei elektrisch betätigbare Zuschaltventile 26a, 26b. Die zuvor genannten Komponenten 2, 3, 5, 20, 22a, 22b, 23a, 23b, 26a, 26b, 27, 28, 29, 30, 36, 37, 38, 42, 45, 47, 48, 49, 50, 51 sind zu einem zweiten elektrohydraulischen Modul zusammengefasst, das mit dem Bezugszeichen 100 versehen ist. Der Ansteuerung sämtlicher elektrisch betätigbaren Komponenten des zweiten Moduls 100 dient eine elektronische Steuer- und Regeleinheit 110, die mittels einer Kommunikationsleitung 111 mit der zuvor genannten elektronischen Steuer- und Regeleinheit 210 Daten austauscht.

In Fig. 1 sind die erwähnten, einerseits an die Systemdruckleitung 54 angeschlossenen Zuschaltventile 26a, 26b andererseits an die Bremskreisdruckleitungen 12a, 12b angeschlossen. Bei einer Aktivierung der Zuschaltventile 26a, 26b wird demnach der Systemdruck auf die Bremskreisdruckleitungen 12a, 12b aufgeschaltet. Diese Aktivierung erfolgt immer dann, wenn der Fahrzeugführer das Bremssystem in der "Brake-by-Wire" Betriebsart ansteuert und gleichzeitig oder mit sehr geringem Zeitversatz nach dem Aktivieren der Trennventile 23a, 23b und des Simulatorfreigabeventils 42. Damit werden in der "Brake-by-Wire" Betriebsart der Hauptzylinder 2 und das Pedal 1 von den Bremskreisdrücken entkoppelt und mit dem Simulator 3 verbunden.
Wie weiterhin der Fig. 1 entnehmbar ist, sind erstes 200 und zweites elektrohydraulisches Modul 100 hydraulisch über die beiden Bremskreisdruckleitungen 12a, 12b miteinander verbunden, auf die in der "Brake-by-Wire" Betriebsart im zweiten Modul 100 der Systemdruck aufgeschaltet wird. Innerhalb des ersten Moduls 200 sind die Bremskreisdruckleitungen 12a, 12b, über je ein analog regelbares, stromlos offenes (SO-) 2/2-Wegeventil 34a, 34b, dem je ein in Strömungsrichtung zu den Radbremsen 8 - 11 öffnendes Rückschlagventil 35a, 35b parallel geschaltet ist, mit den Modulatorvordruckleitungen 13a, 13b verbunden. Diese Ventile werden aktiviert, wenn beispielsweise für einen fahrdynamisch korrigierenden Bremseingriff mit Hilfe der Pumpen 32a, 32b Modulatorvordrücke realisiert werden, die höher sind als die Bremskreisdrücke. Das für einen solchen Druckaufbau mittels der Pumpen 32a, 32b benötigte Druckmittelvolumen wird diesen über zu diesem Zweck elektrisch aktivierte, ansonsten - d.h. im stromlosen Zustand - geschlossene Druckmittelzufuhrventile 33a, 33b zugeführt, die zwischen den Bremskreisdruckleitungen 12a, 12b und den saugseitigen Anschlüssen der Pumpen 32a, 32b geschaltet sind.

Innerhalb des zweiten Moduls 100 sind in Fig. 1 die Ausgangsanschlüsse der Trennventile 23a, 23b mit denen der Zuschaltventile 26a, 26b verbunden, was die bereits erwähnte hydraulische Verbindung der beiden Module 100, 200 durch lediglich zwei hydraulische Strömungswege erlaubt, die durch die im vorstehenden Text erwähnten Bremskreisdruckleitungen 12a, 12b gebildet sind.

In Fig. 2 sind im Gegensatz zur Fig. 1 die erwähnten, einerseits an die Systemdruckleitung 54 angeschlossenen Zuschaltventile 126a, 126b andererseits direkt an die Modulatorvordruckdruckleitungen 113a, 113b angeschlossen, während die Bremskreisdruckleitungen 112a, 112b direkt mit den saugseitigen Anschlüssen der Pumpen 32a, 32b verbunden sind. Demzufolge weist die in der in Fig. 2 gezeigte zweite Ausführung der erfindungsgemäßen Bremsanlage insgesamt vier separate hydraulische Verbindungen zwischen dem ersten 200 und dem zweiten elektrohydraulischen Modul 100 auf. Zum Aufbau von Drücken in den Modulatorvordruckleitungen 113a, 113b, die höher sind als die Drücke, die mit Hilfe der Pumpen 32a, 32b realisiert werden, die höher sind als die Bremskreisdrücke und der Systemdruck, bleiben die Trennventile 123a, 123b geöffnet, wodurch die Pumpen 32a, 32b aus dem Hauptzylinder 2 mit Druckmittel versorgt werden. Druckmittelzufuhrventile werden demnach in der Variante nach Fig.2 nicht benötigt. Zur Regelung der Drücke in den Modulatorvordruckleitungen 113a, 113b, bei fördernden Pumpen 32a, 32b sind zwischen den Modulatorvordruckleitungen 113a, 113b und den Saugseiten der Pumpen 32a, jeweils eine Parallelschaltung eines analog regelbaren, stromlos offenen (SO-) 2/2-Wegeventils 134a, 134b mit einem zu den Modulatorvordruckleitungen 113a, 113b öffnenden Rückschlagventil 135a, 135b vorgesehen. Bis auf die aufgezählten Unterscheidungsmerkmale entspricht die in Fig. 2 dargestellte elektrohydraulische Schaltung der Darstellung in Fig. 1, wobei die gleichen Elemente mit den gleichen Bezugszeichen versehen sind.

Die Funktionsweise der erfindungsgemäßen Bremsanlage sowohl in der bevorzugten Betriebsart "Brake-by-wire" als auch in der sog. Rückfallbetriebsart ergibt sich für den auf dem einschlägigen technischen Gebiet tätigen Fachmann aus dem Offenbarungsgehalt der vorliegenden Patentanmeldung und braucht deswegen nicht näher erläutert zu werden.

## Patentansprüche

1. Bremsanlage für Kraftfahrzeuge, die in einer "Brake-by-Wire" Betriebsart sowohl vom Fahrzeugführer als auch unabhängig vom Fahrzeugführer ansteuerbar ist, vorzugsweise in der "Brake-by-Wire" Betriebsart betrieben wird und in mindestens einer Rückfallbetriebsart betrieben werden kann, in der nur der Betrieb durch den Fahrzeugführer möglich ist, mit
a) einem Bremspedal (1) zum Betätigen eines Hauptbremszylinders (2) mit einem Gehäuse (30), zwei hintereinander angeordneten Kolben (15, 16), die im Gehäuse (30) angeordnete Druckräume (17, 18) begrenzen, an die zwei Bremskreise (I, II) angeschlossen sind, auf die bei der Betätigung der Bremsanlage durch den Fahrzeugführer eine Betätigungskraft ausgeübt wird und die bei unbetätigtem Bremspedal (1) von Rückstellfedern (24, 25) in eine Ausgangsstellung positioniert werden,
b) einem unter Atmosphärendruck stehenden Druckmittelvorratsbehälter (4) mit den Druckräumen (17, 18) zugeordneten Kammern,
c) einem Wegsimulator (3) mit einem Simulatorfreigabeventil (42), der in der Betriebsart "Brake-by-wire" dem Fahrzeugführer das gewohnte Bremspedalgefühl vermittelt, wobei er über das Simulatorfreigabeventil (42) mit einem der Druckräume (17) hydraulisch verbunden ist und diese Verbindung in der Rückfallbetriebsart getrennt ist,
d) einer elektrisch steuerbaren Druckquelle (5), die einen Bremssystemdruck abgibt,
e) mit Trennventilen (23a, 23b; 123a, 123b) zum Absperren der Druckräume (17, 18) von den Bremskreisen (I, II),
f) mittels eines Elektromotors angetriebenen, den Bremskreisen zugeordneten Pumpen (32a, 32b) sowie hydraulischen Niederdruckspeichern (14a, 14b),
g) einem Einlassventil (6a - 6d) und einem Auslassventil (7a - 7d) pro Radbremse (8, 9, 10, 11) zum Einstellen radindividueller Bremsdrücke, die aus den Bremskreisen zugeordneten Modulatorvordrücken abgeleitet werden, wobei die Eingangsanschlüsse der Einlassventile mittels Modulatorvordruckleitungen (13a, 13b; 113a, 113b) mit den Modulatorvordrücken versorgt werden, und wobei die Einlassventile (6a - 6d) im nicht angesteuerten Zustand den Modulatorvordruck zu den Radbremsen weiterleiten und im angesteuerten Zustand einen Radbremsdruckaufbau begrenzen oder verhindern und die Auslassventile (7a - 7d) im nicht angesteuerten Zustand ein Abströmen von Druckmittel aus den Radbremsen in die Niederdruckspeicher (14a, 14b) verhindern und im angesteuerten Zustand zulassen und kontrollieren, wobei die Einlassventile (6a - 6d) geschlossen werden, so dass ein Radbremsdruckabbau erfolgt,
h) mit an die Ausgangsanschlüsse der Pumpen (32a, 32b) angeschlossenen, elektrisch betätigbaren, stromlos offenen Ventilen (34a, 34b; 134a, 134b), i) mindestens einer elektronischen Steuer- und Regeleinheit (110, 210),
**dadurch gekennzeichnet, dass**
j) eine Wegerfassungseinrichtung (28), die den Betätigungsweg des Bremspedals (1) oder des mit dem Bremspedal (1) verbundenen Kolbens (15) erfasst, vorgesehen ist, und dass
k) eine Ventilanordnung (23a, 23b, 26a, 26b, 34a, 34b; 123a, 123b, 126a, 126b, 134a, 134b) vorgesehen ist, welche die Trennventile, den Bremskreisen (I, II) zugeordnete Zuschaltventile (26a, 26b; 126a, 126b), über die in bestromtem Zustand die steuerbare Druckquelle (5) mit den Modulatorvordruckleitungen verbunden wird, sowie die an die Ausgangsanschlüsse der Pumpen angeschlossenen, elektrisch betätigbaren, stromlos offenen Ventile umfasst, wobei die Ventilanordnung in unbestromtem Zustand für jeden der Bremskreise (I, II) eine hydraulische Verbindung vom Druckraum (17, 18) des Hauptbremszylinders (2) zur Modulatorvordruckleitung (13a, 13b; 113a, 113b) herstellt und im bestromten Zustand trennt, und wobei die Ventilanordnung (23a, 23b, 26a, 26b, 34a, 34b; 123a, 123b, 126a, 126b, 134a, 134b) sowohl in unbestromtem als auch in bestromtem Zustand eine Druckbeaufschlagung der elektrisch steuerbaren Druckquelle (5) aus den Druckräumen (17, 18) verhindert, wobei die Pumpen (32a, 32b), die Niederdruckspeicher (14a, 14b), Rückschlagventile (31a, 31b), hydraulische Dämpfungselemente (53a, 53b) und die Einlassventile (6a - 6d) und Auslassventile (7a - 7d) in einem ersten Modul (200) zusammen gefasst sind, das über hydraulische Verbindungsleitungen (12a, 12b; 112a, 112b; 113a, 113b) an ein zweites Modul (100) angeschlossen ist, das das erste Modul (200) mit hydraulischem Druck versorgt, wobei im zweiten Modul (100) eine hydraulische Druckausgleichsleitung (37) zwischen einem (17) der Druckräume (17, 18) des Hauptbremszylinders (2) und einer Nachlaufkammer des Druckmittelvorratsbehälters (4) vorgesehen ist, in der eine Parallelschaltung eines elektrisch betätigbaren, stromlos offenen (SO-) 2/2-Wegeventils (21) mit einem zum Hauptbremszylinder (2) hin öffnenden Rückschlagventil (27) zwischengeschaltet ist.

2. Bremsanlage nach Anspruch 1, **dadurch gekennzeichnet, dass** das zweite Modul (100) den Hauptbremszylinder (2), den Wegsimulator (3), die elektrisch steuerbare Druckquelle (5), die Trennventile (23a, 23b, 123a, 123b), die Zuschaltventile (26a, 26b, 126a, 126b), Drucksensoren (20, 36) zum Erfassen des vom Hauptbremszylinder (2) sowie von der elektrisch steuerbaren Druckquelle (5) bereit gestellten Druckes, die Wegerfassungseinrichtung (28) sowie den Druckmittelvorratsbehälter (4) umfasst.

3. Bremsanlage nach Anspruch 1 oder 2, **dadurch gekennzeichnet, dass** das erste sowie das zweite Modul (200, 100) mit jeweils einer separaten elektronischen Steuer- und Regeleinheit (210, 110) ausgestattet sind, die über eine Kommunikationsleitung (111) Daten austauschen.

4. Bremsanlage nach Anspruch 3, **dadurch gekennzeichnet, dass** innerhalb des zweiten Moduls (100) in jedem Bremskreis (I, II) ein Ausgangsanschluss eines Trennventils (23a, 23b) und eines Zuschaltventils (26a, 26b) verbunden sind.

5. Bremsanlage nach mindestens einem der Ansprüche 1 bis 4, **dadurch gekennzeichnet, dass** das erste und das zweite Modul hydraulisch über zwei Bremskreisdruckleitungen (12a, 12b) miteinander verbunden sind, wobei die Bremskreisdruckleitungen (12a, 12b) an die Saugseiten der hydraulischen Pumpen (32a, 32b) über jeweils ein elektromagnetisch betätigbares, stromlos geschlossenes (SG-) 2/2-Wegeventil (33a, 33b) anschließbar sind.

6. Bremsanlage nach mindestens einem der Ansprüche 1 bis 4, **dadurch gekennzeichnet, dass** zwischen erstem (200) und zweitem (100) elektrohydraulischem Modul erste hydraulische Verbindungen (112a, 112b) zum Übertragen von Bremskreisdrücken und zweite hydraulische Verbindungen (113a, 113b) zum Übertragen der Modulatorvordrücke vorgesehen sind.

7. Bremsanlage nach Anspruch 6, **dadurch gekennzeichnet, dass** die Trennventile (123a, 123b) die ersten hydraulischen Verbindungen zum Übertragen der Bremskreisdrücke (112a, 112b) zwischen dem zweiten (100) und dem ersten hydraulischen Modul (200) absperren bzw. freigeben, wobei die ersten hydraulischen Verbindungen (112a, 112b) im ersten Modul (200) an die Saugseiten der hydraulischen Pumpen (32a, 32b) angeschlossen sind.

8. Bremsanlage nach Anspruch 6 oder 7, **dadurch gekennzeichnet, dass** die hydraulischen Verbindungen zum Übertragen der Modulatorvordrücke zwischen den Modulen (100, 200) innerhalb des zweiten Moduls (100) über die Zuschaltventile (126a, 126b) mit der an die Druckquelle (5) angeschlossenen Systemdruckleitung (54) verbindbar sind.

9. Bremsanlage nach Anspruch 6 oder 7, **dadurch gekennzeichnet, dass** die hydraulischen Verbindungen zum Übertragen der Bremskreisdrücke zwischen den Modulen (100, 200) innerhalb des ersten hydraulischen Moduls (200) über eine Parallelschaltung eines analog regelbaren, stromlos offenen (SO-) 2/2-Wegeventils (134a, 134b) mit einem zu den Einlassventilen (6a - 6b; 6c - 6d) hin öffnenden Rückschlagventil (135a, 135b) im unbestromten Zustand der Ventilanordnung mit den Modulatorvordruckleitungen (113a, 113b) verbunden sind.

10. Bremsanlage nach mindestens einem der Ansprüche 1 bis 9, **dadurch gekennzeichnet, dass** die Ausgangsvolumenströme der Pumpen (32a, 32b) über die hydraulischen Dämpfungselemente (53a, 53b) unmittelbar an die Modulatorvordruckleitungen (13a, 13b; 113a, 113b) abgegeben werden.

11. Bremsanlage nach mindestens einem der Ansprüche 1 bis 10, **dadurch gekennzeichnet, dass** die elektrisch steuerbare Druckquelle (5) als ein einkreisiger elektrohydraulischer Aktuator ausgebildet ist, der durch einen Elektromotor (44) sowie eine dem Elektromotor (44) wirkungsmäßig nachgeschaltete Zylinder-Kolben-Anordnung (43, 46) gebildet ist, wobei der Kolben (43) über ein Getriebe durch den Elektromotor (44) angetrieben wird und wobei mindestens ein eine Zustandsgröße des Elektromotors (44) erfassender Sensor (45, 48) vorgesehen ist.

## Claims

1. Brake system for motor vehicles which in a brake-by-wire operating mode can be activated both by the vehicle driver and independently of the vehicle driver, is operated preferably in the brake-by-wire operating mode and can be operated in at least one fallback operating mode in which only operation by the vehicle driver is possible, comprising
a) a brake pedal (1) for actuating a brake master cylinder (2) having a housing (30) and two pistons (15, 16) which are arranged one behind the other and delimit pressure chambers (17, 18) arranged in the housing (30), to which pressure chambers (17, 18) two brake circuits (I, II) are connected, an actuating force being exerted on the pistons (15, 16) upon actuation of the brake system by the vehicle driver and the pistons (15, 16) being positioned in a starting position by return springs (24, 25) when the brake pedal (1) is not actuated,
b) a pressure medium reservoir (4) which is under atmospheric pressure and has chambers associated with the pressure chambers (17, 18),
c) a travel simulator (3) having a simulator release valve (42), which travel simulator (3) communicates the accustomed brake pedal feel to the vehicle driver in the brake-by-wire operating mode, being connected hydraulically via the simulator release valve (42) to one of the pressure chambers (17) and this connection being separated in the fallback operating mode,
d) an electrically controllable pressure source (5) which delivers a brake system pressure,
e) isolation valves (23a, 23b; 123a, 123b) for isolating the pressure chambers (17, 18) from the brake circuits (I, II),
f) pumps (32a, 32b) which are driven by means of an electric motor and are associated with the brake circuits, together with low-pressure hydraulic accumulators (14a, 14b),
g) an inlet valve (6a-6d) and an outlet valve (7a-7d) for each wheel brake (8, 9, 10, 11) for setting wheel-individual brake pressures which are derived from modulator admission pressures associated with the brake circuits, the inlet ports of the inlet valves being supplied with the modulator admission pressures by means of modulator admission pressure lines (13a, 13b; 113a, 113b), and the inlet valves (6a-6d) transmitting the modulator admission pressure to the wheel brakes in the unactivated state and limiting or preventing a build-up of wheel brake pressure in the activated state and the outlet valves (7a-7d) preventing an outflow of pressure medium from the wheel brakes into the low-pressure accumulator (14a, 14b) in the unactivated state and permitting and controlling said outflow in the activated state, the inlet valves (6a-6d) being closed, so that a reduction of wheel brake pressure takes place,
h) electrically actuable, currentlessly open valves (34a, 34b; 134a, 134b) connected to the outlet ports of the pumps (32a, 32b), and
i) at least one electronic control and regulation unit (110, 210),
**characterized in that**
j) there is provided a travel detection device (28) which detects the actuation travel of the brake pedal (1) or of the piston (15) connected to the brake pedal (1), and **in that**
k) there is provided a valve arrangement (23a, 23b, 26a, 26b, 34a, 34b; 123a, 123b, 126a, 126b, 134a, 134b) which includes the isolation valves, sequence valves (26a, 26b; 126a, 126b) associated with the brake circuits (I, II), via which valves (26a, 26b; 126a, 126b), in the energized state thereof, the controllable pressure source (5) is connected to the modulator admission pressure lines, and the electrically actuable, currentlessly open valves connected to the outlet ports of the pumps, the valve arrangement in the unenergized state establishing for each of the brake circuits (I, II) a hydraulic connection from the pressure chamber (17, 18) of the brake master cylinder (2) to the modulator admission pressure line (13a, 13b; 113a, 113b) and disconnecting said hydraulic connection in the unenergized state, and the valve arrangement (23a, 23b, 26a, 26b, 34a, 34b; 123a, 123b, 126a, 126b, 134a, 134b) preventing the electrically controllable pressure source (5) from being subjected to pressure from the pressure chambers (17, 18) both in the unenergized and in the energized state, the pumps (32a, 32b), the low-pressure accumulators (14a, 14b), the non-return valves (31a, 31b), hydraulic damping elements (53a, 53b) and the inlet valves (6a-6d) and outlet valves (7a-7d) being combined in a first module (200) which is connected via hydraulic connecting lines (12a, 12b; 112a, 112b; 113a, 113b) to a second module (100) which supplies the first module (200) with hydraulic pressure in the second module (100) a hydraulic pressure compensation line (37) being provided between one (17) of the pressure chambers (17, 18) of the brake master cylinder (2) and a feed chamber of the pressure medium reservoir (4), in which pressure compensation line (37) a parallel connection of an electrically actuable, currentlessly open (SO) 2/2-way valve (21) with a non-return valve (27) opening towards the brake master cylinder (2) is inserted.

2. Brake system according to Claim 1, **characterized in that** the second module (100) includes the brake master cylinder (2), the travel simulator (3), the electrically controllable pressure source (5), the isolation valves (23a, 23b, 123a, 123b), the sequence valves (26a, 26b, 126a, 126b), pressure sensors (20, 36) for detecting the pressure supplied by the brake master cylinder (2) and by the electrically controllable pressure source (5), the travel detection device (28) and the pressure medium reservoir (4).

3. Brake system according to Claim 1 or 2, **characterized in that** the first and the second module (200, 100) are each equipped with a respective separate electronic control and regulation unit (210, 110) which exchange data via a communication line (111).

4. Brake system according to Claim 3, **characterized in that** within the second module (100) an outlet connection of an isolation valve (23a, 23b) and of a sequence valve (26a, 26b) are connected in each brake circuit (I, II).

5. Brake system according to at least one of Claims 1 to 4, **characterized in that** the first and the second module are connected to one another hydraulically via two brake circuit pressure lines (12a, 12b), the brake circuit pressure lines (12a, 12b) being connectable to the suction sides of the hydraulic pumps (32a, 32b) via a respective electromagnetically actuable, currentlessly closed (SG) 2/2-way valve (33a, 33b) in each case.

6. Brake circuit according to at least one of Claims 1 to 4, **characterized in that** first hydraulic connections (112a, 112b) for transmitting brake circuit pressures and second hydraulic connections (113a, 113b) for transmitting the modulator admission pressures are provided between the first (200) and second (100) electrohydraulic modules.

7. Brake system according to Claim 6, **characterized in that** the isolation valves (123a, 123b) block or open the first hydraulic connections for transmitting the brake circuit pressures (112a, 112b) between the second (100) and the first hydraulic module (200), the first hydraulic connections (112a, 112b) being connected to the suction sides of the hydraulic pumps (32a, 32b) in the first module (200).

8. Brake system according to Claim 6 or 7, **characterized in that** the hydraulic connections for transmitting the modulator admission pressures between the modules (100, 200) are connectable within the second module (100) via the sequence valves (126a, 126b) to the system pressure line (54) connected to the pressure source (5).

9. Brake system according to Claim 6 or 7, **characterized in that** the hydraulic connections for transmitting the brake circuit pressures between the modules (100, 200) are connected within the first hydraulic module (200), in the unenergized state of the valve arrangement, to the modulator admission pressure lines (113a, 113b) via a parallel connection of a currentlessly open (SO) 2/2-way valve (134a, 134b), controllable by analog means, with a non-return valve (135a, 135b) which opens towards the inlet valves (6a-6b; 6c-6d).

10. Brake system according to at least one of Claims 1 to 9, **characterized in that** the outlet volume flows of the pumps (32a, 32b) are delivered directly to the modulator admission pressure lines (13a, 13b; 113a, 113b) via the hydraulic damping elements (53a, 53b).

11. Brake system according to at least one of Claims 1 to 10, **characterized in that** the electrically controllable pressure source (5) is in the form of a single-circuit electrohydraulic actuator which is formed by an electric motor (44) and a cylinder-piston arrangement (43, 46) connected operatively to the output of the electric motor (44), the piston (43) being driven via a transmission by the electric motor (44) and at least one sensor (45, 48) which detects a state variable of the electric motor (44) being provided.

## Revendications

1. Système de freinage pour véhicule automobile, qui peut être commandé dans un mode de fonctionnement de freinage électronique à la fois par le conducteur du véhicule et également indépendamment du conducteur du véhicule, de préférence dans le mode de fonctionnement de freinage électronique et qui peut fonctionner dans au moins un mode de fonctionnement de secours dans lequel seul le fonctionnement par le conducteur du véhicule est possible, comprenant
a) une pédale de frein (1) pour commander un cylindre de frein principal (2) avec un boîtier (30), deux pistons (15, 16) disposés l'un derrière l'autre, qui limitent des espaces de pression (17, 18) disposés dans le boîtier (30), au niveau desquels sont raccordés deux circuits de freinage (I, II) sur lesquels est exercée une force d'actionnement lors de l'actionnement du système de freinage par le conducteur du véhicule et qui sont positionnés par des ressorts de rappel (24, 25) dans une position de départ lorsque la pédale de frein (1) n'est pas actionnée,
b) un réservoir de fluide sous pression (4) soumis à la pression atmosphérique avec des chambres associées aux espaces de pression (17, 18),
c) un simulateur de course (3) avec une soupape de libération de simulateur (42) qui donne au conducteur du véhicule la sensation habituelle de la pédale de frein dans le mode de fonctionnement de freinage électronique, le simulateur de course étant connecté hydrauliquement par le biais de la soupape de libération de simulateur (42) à l'un des espaces de pression (17) et cette connexion étant coupée dans le mode de fonctionnement de secours,
d) une source de pression (5) pouvant être commandée électriquement, qui fournit une pression de système de freinage,
e) avec des soupapes de coupure (23a, 23b ; 123a, 123b) pour bloquer les espaces de pression (17, 18) par rapport aux circuits de freinage (I, II),
f) des pompes (32a, 32b) associées aux circuits de freinage et entraînées au moyen d'un moteur électrique, ainsi que des accumulateurs basse pression hydrauliques (14a, 14b),
g) une soupape d'entrée (6a - 6d) et une soupape de sortie (7a - 7d) pour chaque frein de roue (8, 9, 10, 11) pour l'ajustement de pressions de freinage individuelles aux roues, qui sont dérivées de pressions préliminaires de modulateur associées aux circuits de freinage, les raccords d'entrée des soupapes d'entrée étant alimentés en les pressions préliminaires de modulateur au moyen de conduites de pression préliminaires de modulateur (13a, 13b ; 113a, 113b), et les soupapes d'entrée (6a - 6d), dans l'état non commandé, transmettant la pression préliminaire de modulateur aux freins de roue et, dans l'état commandé, limitant ou empêchant une augmentation de la pression de frein de roue et les soupapes de sortie (7a - 7d), dans l'état non commandé, empêchant une sortie de fluide sous pression hors des freins de roue dans les accumulateurs basse pression (14a, 14b), et permettant et contrôlant la sortie de fluide sous pression dans l'état commandé, les soupapes d'entrée (6a - 6d) étant fermées de telle sorte qu'il se produise une augmentation de pression de frein de roue,
h) des soupapes (34a, 34b ; 134a, 134b) ouvertes en l'absence de courant, pouvant être commandées électriquement, raccordées aux raccords de sortie des pompes (32a, 32b),
i) au moins une unité de commande et de régulation électronique (110, 210),
**caractérisée en ce que**
j) un dispositif de détection de course (28) est prévu, lequel détecte la course d'actionnement de la pédale de frein (1) ou du piston (15) connecté à la pédale de frein (1), et **en ce que**
k) un agencement de soupapes (23a, 23b, 26a, 26b, 34a, 34b ; 123a, 123b, 126a, 126b, 134a, 134b) est prévu, lequel comprend les soupapes de coupure, des soupapes de commutation (26a, 26b ; 126a, 126b) associées aux circuits de freinage (I, II), par le biais desquelles, dans l'état parcouru par le courant, la source de pression commandable (5) est connectée aux conduites de pression préliminaires de modulateur, ainsi que les soupapes ouvertes en l'absence de courant, pouvant être commandées électriquement, raccordées aux raccords de sortie des pompes, l'agencement de soupapes, dans l'état non alimenté en courant, pour chacun des circuits de freinage (I, II), établissant une liaison hydraulique de l'espace de pression (17, 18) du cylindre de frein principal (2) à la conduite de pression préliminaire de modulateur (13a, 13b ; 113a, 113b) et la coupant dans l'état alimenté en courant, et l'agencement de soupapes (23a, 23b, 26a, 26b, 34a, 34b ; 123a, 123b, 126a, 126b, 134a, 134b), à la fois dans l'état alimenté en courant et dans l'état non alimenté en courant, empêchant une sollicitation par pression de la source de pression (5) pouvant être commandée électriquement à partir des espaces de pression (17, 18), les pompes (32a, 32b), les accumulateurs basse pression (14a, 14b), les clapets antiretour (31a, 31b), les éléments d'amortissement hydrauliques (53a, 53b) et les soupapes d'entrée (6a - 6d) et les soupapes de sortie (7a - 7d) étant réunis dans un premier module (200) qui est raccordé par le biais de conduites de liaison hydrauliques (12a, 12b ; 112a, 112b ; 113a, 113b) à un deuxième module (100) qui alimente en pression hydraulique le premier module (200), une conduite d'équilibrage de pression hydraulique (37) étant prévue dans le deuxième module (100) entre l'un (17) des espaces de pression (17, 18) du cylindre de frein principal (2) et une chambre d'alimentation du réservoir de fluide sous pression (4), dans laquelle est interposé un branchement en parallèle d'une soupape à 2/2 voies (21) (OF) ouverte en l'absence de courant et pouvant être commandée électriquement avec un clapet antiretour (27) s'ouvrant vers le cylindre de frein principal (2).

2. Installation de freinage selon la revendication 1, **caractérisée en ce que** le deuxième module (100) comprend le cylindre de frein principal (2), le simulateur de course (3), la source de pression (5) pouvant être commandée électriquement, les soupapes de coupure (23a, 23b, 123a, 123b), les soupapes de commutation (26a, 26b, 126a, 126b), des capteurs de pression (20, 36) pour détecter la pression fournie par le cylindre de frein principal (2) ainsi que par la source de pression (5) pouvant être commandée électriquement, le dispositif de détection de course (28) ainsi que le réservoir de fluide sous pression (4).

3. Installation de freinage selon la revendication 1 ou 2, **caractérisée en ce que** le premier et le deuxième module (200, 100) sont chacun munis d'une unité de commande et de régulation électronique séparée (210, 110), lesquelles échangent des données par le biais d'une ligne de communication (111).

4. Installation de freinage selon la revendication 3, **caractérisée en ce qu'**à l'intérieur du deuxième module (100), dans chaque circuit de freinage (I, II), sont connectés un raccord de sortie d'une soupape de coupure (23a, 23b) et une soupape de commutation (26a, 26b).

5. Installation de freinage selon au moins l'une quelconque des revendications 1 à 4, **caractérisée en ce que** le premier et le deuxième module sont connectés hydrauliquement l'un à l'autre par le biais de deux conduites de pression du circuit de freinage (12a, 12b), les conduites de pression du circuit de freinage (12a, 12b) pouvant être raccordées aux côtés aspiration des pompes hydrauliques (32a, 32b) par le biais d'une soupape à 2/2 voies respective (33a, 33b) raccordée dans l'état non alimenté en courant et pouvant être commandée électromagnétiquement.

6. Installation de freinage selon au moins l'une quelconque des revendications 1 à 4, **caractérisée en ce qu'**entre le premier (200) et le deuxième (100) module électrohydraulique, sont prévues des premières connexions hydrauliques (112a, 112b) pour transférer des pressions du circuit de freinage et des deuxièmes connexions hydrauliques (113a, 113b) pour transférer les pressions préliminaires de modulateur.

7. Installation de freinage selon la revendication 6, **caractérisée en ce que** les soupapes de coupure (123a, 123b) bloquent ou libèrent les premières connexions hydrauliques pour transférer les pressions du circuit de freinage (112a, 112b) entre le deuxième (100) et le premier (200) module hydraulique, les premières connexions hydrauliques (112a, 112b) étant raccordées dans le premier module (200) aux côtés aspiration des pompes hydrauliques (32a, 32b).

8. Installation de freinage selon la revendication 6 ou 7, **caractérisée en ce que** les connexions hydrauliques pour transférer les pressions préliminaires de modulateur entre les modules (100, 200) peuvent être connectées à l'intérieur du deuxième module (100) par le biais des soupapes de commutation (126a, 126b) à la conduite de pression du système (54) raccordée à la source de pression (5).

9. Installation de freinage selon la revendication 6 ou 7, **caractérisée en ce que** les connexions hydrauliques pour transférer les pressions du circuit de freinage entre les modules (100, 200) sont connectées aux conduites de pression préliminaire de modulateur (113a, 113b) à l'intérieur du premier module hydraulique (200) par le biais d'un branchement en parallèle d'une soupape à 2/2 voies (OF) (134a, 134b) ouverte dans l'état non alimenté en courant, pouvant être régulée de manière analogique, et d'un clapet antiretour (135a, 135b) ouvrant vers les soupapes d'entrée (6a - 6b ; 6c - 6d) dans l'état non alimenté en courant de l'agencement de soupapes.

10. Installation de freinage selon au moins l'une quelconque des revendications 1 à 9, **caractérisée en ce que** les débits volumiques de sortie des pompes (32a, 32b) sont délivrés par le biais des éléments d'amortissement hydrauliques (53a, 53b) directement aux conduites de pression préliminaires de modulateur (13a, 13b ; 113a, 113b).

11. Installation de freinage selon au moins l'une quelconque des revendications 1 à 10, **caractérisée en ce que** la source de pression (5) pouvant être commandée électriquement est réalisée sous forme d'actionneur électrohydraulique à circuit unique qui est formé par un moteur électrique (44) ainsi qu'un agencement cylindre-piston (43, 46) monté en aval du moteur électrique (44) du point de vue de son action, le piston (43) étant entraîné par le moteur électrique (44) par le biais d'une transmission, et au moins un capteur (45, 48) détectant une grandeur d'état du moteur électrique (44) étant prévu.
